(19) Europäisches Patentamt / European Patent Office / Office européen des brevets

(11) **EP 2 617 851 B1**

(12) **EUROPEAN PATENT SPECIFICATION**

(45) Date of publication and mention
of the grant of the patent:
**11.07.2018 Bulletin 2018/28**

(21) Application number: **11825306.1**

(22) Date of filing: **15.09.2011**

(51) Int Cl.:
*C22C 38/00* (2006.01)        *B21B 3/00* (2006.01)
*C21D 9/46* (2006.01)        *C22C 38/14* (2006.01)
*C22C 38/58* (2006.01)

(86) International application number:
**PCT/JP2011/071753**

(87) International publication number:
**WO 2012/036308 (22.03.2012 Gazette 2012/12)**

(54) **HIGH-STRENGTH HOT-ROLLED STEEL SHEET HAVING SUPERIOR PUNCHABILITY AND METHOD FOR PRODUCING SAME**

HOCHFESTES HEISSGEWALZTES STAHLBLECH MIT HERVORRAGENDER STANZBARKEIT UND VERFAHREN ZU SEINER HERSTELLUNG

TÔLE LAMINÉE À CHAUD DE HAUTE RÉSISTANCE PRÉSENTANT UNE APTITUDE AU POINÇONNAGE SUPÉRIEURE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2010 JP 2010210190**

(43) Date of publication of application:
**24.07.2013 Bulletin 2013/30**

(73) Proprietor: **JFE Steel Corporation**
**Tokyo 100-0011 (JP)**

(72) Inventors:
• **NAKAJIMA, Katsumi**
**Tokyo 100-0011 (JP)**
• **SAITO, Hayato**
**Tokyo 100-0011 (JP)**
• **FUNAKAWA, Yoshimasa**
**Tokyo 100-0011 (JP)**

• **MORIYASU, Noriaki**
**Tokyo 100-0011 (JP)**
• **MURATA, Takayuki**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
EP-A1- 1 616 970        EP-A1- 1 790 737
EP-A1- 2 000 554        EP-A1- 2 014 781
CN-C- 100 360 698        JP-A- 2000 109 951
JP-A- 2000 109 951        JP-A- 2006 274 318
JP-A- 2008 156 681        JP-A- 2009 263 715
JP-A- 2009 270 142

**Description**

[Technical Field]

The present invention relates to a method for manufacturing a high strength hot rolled steel sheet that is suitable as a material for automobile chassis, structural parts, frameworks, and frame parts for trucks. In particular, it relates to improvements of blanking workability. The "high strength" means that the tensile strength TS is 780 MPa or more.

[Background Art]

In recent years, restrictions on exhaust gas have been tightened from the viewpoint of preserving global environment. Under such trends, improvements of automobile fuel efficiency have been strongly demanded. To meet such a demand, automobile bodies have become increasingly lightweight and parts have become increasingly thinner due to use of high-strength materials. In general, increasing the strength tends to decrease workability such as elongation and hole expandability. Accordingly, it is essential to improve the workability in order to increase the strength of materials. For automobile chassis, frames for trucks, and other parts that require hole-expanding processes, hole-expanding processes become difficult if micro cracks occur in blanked edges during blanking. Particularly, improvements of blanking workability are strongly desired for these parts.

To satisfy such a need, for example, Patent Literature 1 describes a high strength hot rolled steel sheet having excellent hole expandability, containing, in terms of mass%, C: 0.05 to 0.15%, Si: 1.50% or less, Mn: 0.5 to 2.5%, P: 0.035% or less, Al: 0.020 to 0.15%, and Ti: 0.05 to 0.2%, having a microstructure containing 60 to 95 vol% of bainite and solid-solution-strengthened or precipitation-strengthened ferrite or ferrite and martensite, and exhibiting a fracture appearance transition temperature of 0°C or less. According to the technology described in Patent Literature 1, it is described because cooling is performed at a cooling rate of 50°C/hr or more down to a temperature of 300°C or less after coiling, diffusion of P into grain boundaries can be prevented, the fracture appearance transition temperature is controlled to 0°C or less, and the toughness and hole expandability are improved.

Patent Literature 2 describes a high strength hot rolled steel sheet having excellent hole expandability and ductility, containing C: 0.01 to 0.07%, N: 0.005% or less, S: 0.005% or less, Ti: 0.03 to 0.2%, and B: 0.0002 to 0.002%, and having a microstructure that contains a ferrite or bainitic ferrite phase as a main phase and 3% or less of a hard secondary phase and cementite in terms of area fraction. According to the technology described in Patent Literature 2, defects at blanked edges can be prevented by incorporation of B and holding B in a solid-solution state. Note that according to the technology described in Patent Literature 2, the ferrite or bainitic ferrite is the phase having the maximum area and the area fraction of the hard secondary phase that adversely affects the hole expandability is limited to 3% or less.

[Citation List]

[Patent Literature]

PTL 1: Japanese Patent No. 3889766
PTL 2: Japanese Unexamined Patent Application Publication No. 2004-315857

[Summary of Invention]

[Technical Problem]

According to the technology described in Patent Literature 1, hole expandability is improved by preventing grain boundary segregation of P. However, Patent Literature 1 makes no mention of blanking workability and preventing P from segregating in grain boundaries does not immediately or necessarily contribute to improving the properties of blanked edges and blanking workability.

According to the technology described in Patent Literature 2, blanking workability is improved by incorporation of B as an essential component. However, Patent Literature 2 does not mention that the blanking workability can be improved without incorporation of B. Moreover, according to the technology described in Patent Literature 2, the presence or absence of cracks at blanked edges is determined by visual observation after blanking. However, hole expandability is largely affected by the extent of damage inflicted in the material directly below the blanked edges and visual observation is not sufficient for evaluation of properties of blanked edges in relation to hole expandability. Moreover, there is a problem in that such an observation is not sufficient to derive guidelines and dominating factors for improving the properties of blanked edges.

The present invention aims to resolve problems of the related art and provide a high strength hot rolled steel sheet having excellent blanking workability without incorporation of B, and a manufacturing method therefor.

[Solution to Problem]

The inventors of the present invention aiming to achieve the object described above have evaluated properties of blanked edges of high strength hot rolled steel sheets having a tensile strength TS of 780 MPa or more by varying the blanking clearance in the range of 5 to 25% and conducted extensive studies on various factors that affect the blanking workability. As a result, the inventors have found that in order to improve the blanking workability, it is important to obtain a steel sheet microstructure in which microvoid starting points are evenly dispersed and control the blanking process so that local ductility is dominant. The inventors have also found that in order to achieve this, it is important to form a microstructure having a high yield point, low uniform elongation, and high local elongation and that it is essential to control the microstructure of the entire steel sheet to contain a bainite phase as a main phase and control the area fraction of the bainite phase in the microstructure to be more than 95%.

Based on detailed observation of properties of blanked edges such as blanked fracture surfaces and portions near burrs, the inventors have found that a fine bainite phase tends to evenly increase the number of microvoid generation sites during blanking and that it is effective to use a fine bainite structure as a steel sheet microstructure that improves the properties of blanked edges and blanking workability.

The inventors have found that since blanking involves concentric working, it is important to control both the microstructure of a cross section taken in a rolling direction (L direction) of a steel sheet and the microstructure of a cross section taken in a direction (C direction) perpendicular to the rolling direction to be a fine microstructure and it is necessary to control the average grain diameters of the bainite phases in the L-direction cross section and the C-direction cross section to be 5 $\mu$m or less and 4 $\mu$m or less, respectively.

The inventors have also found that the central portion of the sheet in the thickness direction is a region in which the fracture morphology changes from shear to ductile and that when extended grains or segregated sites are present in the sheet thickness center portion, brittle fracture is induced at such sites and a secondary shear surface is generated, thereby degrading the blanking workability. The inventors have found that it is necessary to control the microstructure of the sheet thickness center portion to be a microstructure having fewer extended grains. That is, it is necessary to control the microstructure so that in a region having a thickness equal to 1/10 of the sheet thickness with its center at the center of the sheet in the thickness direction, the number of crystal grains extended in the rolling direction and having an aspect ratio of 5 or more is 7 or less.

The present invention has been made on the basis of these findings and further studies. The present invention can be summarized as follows:

(1) A method for manufacturing a high strength hot rolled steel sheet having excellent blanking workability, the method including heating a steel having a composition that includes, in terms of mass%, C: 0.050 to 0.15%, Si: 0.1 to 1.5%, Mn: 1.0 to 2.0%, P: 0.03% or less, S: 0.0030% or less, Al: 0.01 to 0.08%, Ti: 0.05 to 0.15%, N: 0.005% or less, further optionally includes, in terms of mass%, one or both of Nb: 0.005 to 0.1% and V: 0.005 to 0.2%, at least one selected from Cu: 0.005 to 0.3%, Ni: 0.005 to 0.3% Cr: 0.005 to 0.3%, and Mo: 0.005 to 0.3%, and one or both of Ca: 0.0005 to 0.03% and REM: 0.0005 to 0.03%, and the balance being Fe and unavoidable impurities, to 1200 to 1350°C and subjecting the heated steel to hot rolling that includes rough rolling and finish rolling, in which a finish rolling delivery temperature of the finish rolling is set to a temperature within a range of "Ar$_3$ transformation point +30°C or more" and "Ar$_3$ transformation point +150°C or less", cooling is immediately started after completion of the finish rolling, the cooling is conducted in two stages including first-stage cooling in which the finish rolled sheet is cooled at an average cooling rate of 35°C/sec. or more from the finish rolling delivery temperature to a first stage cooling end temperature of 520 to 580°C and a second-stage cooling in which the finish rolled sheet is cooled at an average cooling rate of 80°C/sec. or more from the first stage cooling end temperature to a coiling temperature, and coiling is performed at a coiling temperature of 300 to 500°C.

(2) The method for manufacturing a high strength hot rolled steel sheet of (1), in which the steel contains one or both of Nb: 0.005 to 0.1% and V: 0.005 to 0.2% in terms of mass%.

(3) The method for manufacturing a high strength hot rolled steel sheet of (1) or (2), in which the steel contains at least one selected from of Cu: 0.005 to 0.3%, Ni: 0.005 to 0.3%, Cr: 0.005 to 0.3%, and Mo: 0.005 to 0.3% in terms of mass%.

(4) The method for manufacturing a high strength hot rolled steel sheet of any one of (1) to (3), in which the steel contains one or both of Ca: 0.0005 to 0.03% and REM: 0.0005 to 0.03% in terms of mass%.

[Advantageous Effects of Invention]

According to the present invention, a high strength hot rolled steel sheet having a tensile strength TS of 780 MPa or more and significantly improved excellent blanking workability can be easily manufactured at low cost and thus a distinctive industrial advantage is provided. Moreover, the present invention also contributes to reducing the weight of automobile bodies and reducing the thickness and weight of various industrial machinery parts.

[Description of Embodiments]

First, the reasons for limiting the composition of the steel are described. Unless otherwise noted, mass% is simply denoted as %.

C: 0.050 to 0.15%

Carbon (C) increases the steel sheet strength mainly through transformation strengthening and contributes to making a finer bainite phase. In order to achieve such effects, the C content needs to be 0.050% or more. At a C content exceeding 0.15%, weldability is degraded. Accordingly, the C content is limited to be in the range of 0.050 to 0.15% and preferably more than 0.070% but not more than 0.11%.

Si: 0.1 to 1.5%

Silicon (Si) increases the steel sheet strength through solid-solution strengthening and contributes to improving ductility of the steel sheet. In order to achieve such effects, the Si content needs to be 0.1% or more. At a Si content exceeding 1.5%, Si-based complex oxides extensively occur along crystal grain boundaries of the surface layer during heating of the steel and these oxides are difficult to eliminate even when descaling is extensively performed during hot rolling, thereby degrading the properties of blanked edges during blanking of the steel sheet. Accordingly, the Si content is limited to be in the range of 0.1 to 1.5% and preferably 0.4 to 1.2%.

Mn: 1.0 to 2.0%

Manganese (Mn) is an element that increases the steel sheet strength through solid-solution strengthening and transformation strengthening. In order to achieve this effect, the Mn content needs to be 1.0% or more. At a Mn content exceeding 2.0%, center segregation extensively occurs and various properties are significantly degraded. Accordingly, the Mn content is limited to be in the range of 1.0 to 2.0% and preferably 1.3 to 2.0%.

P: 0.03% or less

Phosphorus (P) is an element that increases the strength of a steel sheet by forming a solid solution but readily forms inner oxide layers in steel sheet surface layers during manufacture of high strength hot rolled steel sheets and may adversely affect properties of blanked edges. Thus, the P content is preferably as low as possible while a P content up to 0.03% is allowable. Thus, the P content is limited to 0.03% or less and preferably 0.015% or less.

S: 0.0030% or less

Sulfur (S) forms sulfides and decreases the ductility and workability of steel sheets. Thus, the S content is preferably as low as possible while a S content up to 0.0030% is allowable. Thus, the Si content is limited to 0.0030% or less, preferably 0.0015% or less, and more preferably 0.0012% or less.

Al: 0.01 to 0.08%

Aluminum (Al) acts as a deoxidizer and forms fine precipitates (such as AlN). These fine precipitates act as starting points of microvoids and contribute to improving the blanking property. In order to achieve these effects, the Al content needs to be 0.01% or more. At an Al content exceeding 0.08%, the amount of oxides significantly increases and various properties of steel sheets are degraded. Accordingly, the Al content is limited to be in the range of 0.01 to 0.08% and preferably 0.025 to 0.06%.

Ti: 0.05 to 0.15%

Titanium (Ti) forms carbonitrides, makes finer crystal grains, and contributes to increasing the strength through precipitation strengthening and improving the hardenability. Titanium also plays an important role in forming the bainite phase. Moreover, Ti generates fine Ti precipitates and increases the number of starting points of microvoids during blanking, thereby also contributing to improving the blanking property. In order to yield such effects, the Ti content needs to be 0.05% or more. At a Ti content exceeding 0.15%, deformation resistance increases, the rolling load during hot rolling increases significantly, and the load imposed upon the rolling machine increases excessively, thereby making it difficult to conduct rolling. A Ti content exceeding this value is detrimental in that coarse precipitates are formed and various properties of the steel sheet are degraded. Thus, the Ti content is limited to be in the range of 0.05 to 0.15% and preferably 0.08 to 0.14%.

N: 0.005% or less

Nitrogen (N) bonds to nitride-forming elements, forms nitride precipitates, and contributes to making finer crystal grains. However, when the N content is excessively large, coarse nitrides are formed and the workability is degraded. While the N content is preferably reduced as much as possible, a N content up to 0.005% is allowable. Thus, the N content is limited to 0.005% or less and preferably 0.004% or less.

The above-described components are basic components. In addition to these basic components, one or both of Nb: 0.005 to 0.1% and V: 0.005 to 0.2%, and/or at least one selected from Cu: 0.005 to 0.3%, Ni: 0.005 to 0.3%, Cr: 0.005 to 0.3%, and Mo: 0.005 to 0.3%, and/or one or both of Ca: 0.0005 to 0.03% and REM: 0.0005 to 0.03% may be contained as optional elements.

One or both of Nb: 0.005 to 0.1% and V: 0.005 to 0.2%

As with Ti, both Nb and V form carbonitrides, make finer crystal grains, and contribute to increasing the strength through precipitation strengthening and improving the hardenability. They also play a large role in forming the bainite phase, form fine precipitates, increase the number of starting points of microvoids during blanking, and contribute to improving the blanking property. Nb and V may be selected as needed. In order to achieve these effects, the Nb content needs to be 0.005% or more and the V content needs to be 0.005% or more. However, at an Nb content exceeding 0.1% and a V content exceeding 0.2%, coarse precipitates are formed and this induces formation of coarse microvoids during blanking. Thus, when Nb and V are to be contained, their contents are preferably limited to be in the ranges of Nb: 0.005 to 0.1% and V: 0.005 to 0.2% and more preferably in the ranges of Nb: 0.08% or less and V: 0.15% or less, respectively.

At least one selected from Cu: 0.005 to 0.3%, Ni: 0.005 to 0.3%, Cr: 0.005 to 0.3%, and Mo: 0.005 to 0.3%

Copper (Cu), nickel (Ni), chromium (Cr), and molybdenum (Mo) all improve the hardenability and in particular decrease the bainite transition temperature to contribute to making a fine bainite phase. These elements may be selected and contained as needed. In order to achieve such effects, their contents need to be Cu: 0.005% or more, Ni: 0.005% or more, Cr: 0.005% or more, and Mo: 0.005% or more. At a Cu content exceeding 0.3% and a Ni content exceeding 0.3%, surface defects may occur during hot rolling and Cu- or Ni-rich layers remain in the steel sheet surfaces, thereby generating starting points of cracking during blanking. At a Cr content exceeding 0.3%, corrosion resistance is degraded. At a Mo content exceeding 0.3%, the effects are saturated and the effects corresponding to the content cannot be expected, which is economically disadvantageous. Thus, when these elements are to be contained, their contents are preferably limited to be in the ranges of Cu: 0.005 to 0.3%, Ni: 0.005 to 0.3%, Cr: 0.005 to 0.3%, and Mo: 0.005 to 0.3%.

One or both of Ca: 0.0005 to 0.03% and REM: 0.0005 to 0.03%

Calcium (Ca) and rare earth metals (REM) both effectively control the morphology of sulfides and may be selected and contained as needed. Such an effect is exhibited at a Ca content of 0.0005% or more and a REM content of 0.0005% or more. At a Ca content exceeding 0.03% and a REM content exceeding 0.03%, the effects are saturated and effects corresponding to the content cannot be expected. Accordingly, when these elements are to be contained, their contents are preferably limited to be in the ranges of Ca: 0.0005 to 0.03% and REM: 0.0005 to 0.03% and more preferably in the ranges of Ca: 0.0005 to 0.005% and REM: 0.0005 to 0.005%, respectively.

The balance other than the components described above is Fe and unavoidable impurities.

The microstructure of a hot rolled steel sheet which can be obtained by the manufacturing method of the present invention will now be described.

More than 95% of a hot rolled steel sheet is formed of a bainite phase in terms of area fraction throughout the entire region in the sheet thickness direction. Since the steel sheet microstructure is substantially entirely composed of a bainitic single phase, microvoids are evenly formed during blanking, the yield point is high, and the local ductility process is dominant during blanking, thereby improving the blanking workability. This condition cannot be realized when the area fraction of the bainite phase is 95% or less. In order to stably obtain excellent properties at blanking edges and ensure excellent blanking workability, it is most critical to obtain a desired high yield point and a desired fraction of a bainite phase.

The microstructure in a region having a thickness equal to 1/4 of the sheet thickness from the surface is important for improving the blanking workability and in order to further improve the blanking workability, the microstructure in this region is controlled to be a fine bainite phase.

The average grain diameters of the bainite phase in the region having a thickness equal to 1/4 of the sheet thickness from the surface are controlled to be 5 $\mu$m or less in a sheet thickness cross section (L-direction cross section) taken in a direction parallel to the rolling direction and 4 $\mu$m or less in a sheet thickness cross section (C-direction cross section) taken in a direction perpendicular to the rolling direction. When the microstructure in this region is controlled to be a fine bainite phase as described above, blanked fracture surfaces form ductile fracture surfaces constituted by fine dimples and the blanking workability is improved. When the average grain diameter of the bainite phase in this region is increased beyond 5 $\mu$m in the L-direction cross section and 4 $\mu$m in the C-direction cross section, the starting points of microvoids tend to be scarcely dispersed and the roughness and nonuniformity of the blanked edges are increased. Accordingly, the average grain diameters of the bainite phase in the region having a thickness equal to 1/4 of the sheet thickness from the surface in the thickness direction are limited to 5 $\mu$m or less in the L-direction cross section and 4 $\mu$m or less in the C-direction cross section. Preferably, the average diameters are 4 $\mu$m or less in the L-direction cross section and 3 $\mu$m or less in the C-direction cross section.

In order to reliably obtain desired blanking workability, the microstructure is controlled to have fewer crystal grains (extended grains) that are long in the rolling direction in the sheet thickness center portion. The sheet thickness center portion is a region where the fracture morphology changes from shear to ductile. In high strength hot rolled steel sheets particularly, when extended grains and segregated sites are present in the sheet thickness center portion, brittle fracture is induced in that portion and a secondary shear section is formed, thereby degrading the blanking workability. Accordingly, in a region having a thickness equal to 1/10 of the sheet thickness with its center located at the center of the sheet in the thickness direction, the microstructure is controlled so that the number of crystal grains extended in the rolling direction and having an aspect ratio of 5 or more is 7 or less. Here, the "aspect ratio" is the ratio of the length in the rolling direction (L direction) to the length in the direction (C direction) perpendicular to the rolling direction measured for each crystal grain. When more than 7 extended grains having an aspect ratio of 5 or more are present in this region, brittle fracture surface and a secondary shear surface are formed during blanking and desired blanked edge properties are not obtained, resulting in degraded blanking workability. Accordingly, in the region having a thickness equal to 1/10 of the sheet thickness with its center located at the center of the sheet in the thickness direction, the number of crystal grains extended in the rolling direction and having an aspect ratio of 5 or more is limited to 7 or less. Preferably, the number of extended grains is 6 or less.

Next, a preferable method for manufacturing a hot rolled steel sheet of the present invention is described.

A steel having the composition described above is heated and subjected to hot rolling that includes rough rolling and finish rolling so as to prepare a hot rolled steel sheet. The method for preparing the steel is not particularly limited. Any of the conventional methods of preparing a molten steel having the composition described above by melting in a converter or the like and casting the molten steel into a slab or the like by a continuous casting or the like can be used. The ingot casting-clogging method may be used without any problem.

Heating temperature: 1200 to 1350°C

In order to avoid generation of extended grains in the sheet thickness center region as much as possible and decrease the anisotropy of the crystal grains in the region having a thickness equal to 1/4 of the sheet thickness from the surface in the sheet thickness direction, i.e., decrease the difference in crystal grain diameter between the L and C directions, the heating temperature is increased to 1200°C or higher so that processing is conducted at as high temperature as possible. Thus, the heating temperature of the steel is limited to 1200°C or more. In order to dissolve coarse precipitates that have precipitated in the steel, heating at 1200°C or higher is needed. Presence of coarse and nonuniform precipitates degrades the properties of blanked edges during blanking. Meanwhile, when heating is performed at a temperature exceeding 1350°C, the crystal grains in the steel surface layers in particular become coarse, and ultimately, the bainite grains in the steel sheet become coarse. Accordingly, the heating temperature is limited to be in the range of 1200 to 1350°C and preferably 1220 to 1300°C.

The steel heated to the above-described temperature is subjected to hot rolling that includes rough rolling and finish rolling. The conditions for the rough rolling are not particularly limited as long as the desired sheet bar dimensions are achieved. After the rough rolling, finish rolling is performed.

Finish rolling delivery temperature: "$Ar_3$ transformation point +30°C or more" and "$Ar_3$ transformation point +150°C or lower"

If the finish rolling delivery temperature is less than "$Ar_3$ transformation point +30°C", many crystal grains extended in the rolling direction appear and it becomes difficult to obtain a microstructure having fine crystal grains in both L and C directions. In contrast, when the finish rolling delivery temperature exceeds "$Ar_3$ transformation point +150°C", a desired fine bainite phase cannot be obtained. Accordingly, the delivery temperature of the finish rolling is limited to be in the range of "$Ar_3$ transformation point +30°C or more" and "$Ar_3$ transformation point +150°C or less" and preferably "$Ar_3$ transformation point +120°C or less". Here, the finish rolling delivery temperature is a surface temperature.
The $Ar_3$ transformation point is a value calculated from the following equation:

$$Ar_3 \text{ transformation point} = 910 - 203 \times \sqrt{C} - 15.2 \times Ni + 44.7 \times Si + 104 \times V + 31.5 \times Mo - 30 \times Mn - 11 \times Cr - 20 \times Cu + 700 \times P + 400 \times Ti - 0.35 \times CR$$

In the equation, each element symbol denotes the content (mass%) of that element and CR denotes a cooling rate (°C/sec.). When the elements described in the equation are not to be contained, the content thereof is assumed to be zero.
After completion of the finish rolling, cooling is performed immediately and preferably within in 2 seconds, and the cooling is conducted in two stages, i.e., first-stage cooling and second-stage cooling.
In the first-stage cooling, the cooling end temperature is set to 520 to 580°C and the average cooling rate from the finish rolling delivery temperature to the cooling end temperature is 35°C/sec. or more. The cooling end temperature and the cooling rate are in terms of surface temperature.
When the average cooling rate from the finish rolling delivery temperature to the cooling end temperature is less than 35°C/sec., pro-eutectic ferrite is precipitated and it becomes difficult to obtain a desired microstructure more than 95% of which is formed of a bainite phase in terms of area fraction throughout the entire region in the sheet thickness direction. Thus, in the first-stage cooling, the average cooling rate from the finish rolling delivery temperature to the cooling end temperature is limited to 35°C/sec. or more. Note that although there is no need to define the upper limit of the average cooling rate in the first-stage cooling, the production cost will significantly increase if the rate is over 300°C/sec. Thus, the upper limit is preferably about 300°C/sec.
The cooling end temperature in the first-stage cooling is within the range of 520 to 580°C. When the cooling end temperature is less than 520°C or more than 580°C, variation in workability is gradually increased although the mechanism therefor is not clear. Accordingly, the cooling end temperature of the first stage is limited to be in the range of 520 to 580°C.
In the second-stage cooling, cooling is performed at an average cooling rate of 80°C/sec. or more from the cooling end temperature of the first-stage cooling to the coiling temperature.
The second-stage cooling is important for obtaining a fine bainite structure and the average cooling rate is 80°C/sec. or more so that the bainite transformation is induced during cooling and a fine bainite structure is obtained in the region having a thickness equal to 1/4 of the sheet thickness from the surface in the sheet thickness direction. When the average cooling rate is less than 80°C/sec., the microstructure becomes coarse, a desired fine bainite structure cannot be obtained, and excellent blanking workability cannot be achieved.
Although there is no need to define the upper limit of the cooling rate in the second-stage cooling, the production cost will increase significantly if the cooing rate is more than 350°C/sec. Accordingly, the upper limit is preferably about 350°C/sec. After completion of the cooling, the sheet is coiled.

Coiling temperature: 300 to 500°C

When the coiling temperature is less than 300°C, a hard martensite phase and a retained austenite phase are formed and a desired microstructure cannot be obtained. Accordingly, desired blanking workability cannot be obtained. When the coiling temperature exceeds 500°C, a pearlite phase is sometimes formed and desired blanking workability cannot be obtained. Accordingly the coiling temperature is limited to be in the range of 300 to 500°C and preferably less than 450°C.
After the coiling, the scale formed on the surface may be removed by a conventional method by pickling.

Naturally, after pickling, the hot rolled sheet may be temper-rolled or subjected to a plating treatment such as galvanizing or electroplating or a chemical conversion treatment. The present invention can be expected to exhibit enhanced effects when it is applied to a hot rolled steel sheet having a thickness larger than 4 mm.

[EXAMPLES]

Molten steels having compositions shown in Table 1 were prepared by melting in a converter and continuously casted into steel slabs (steels). Each steel slab was heated under the conditions shown in Table 2, rough-rolled, and finish-rolled under conditions shown in Table 2. After completion of the finish rolling, cooling is performed under the conditions shown in Table 2, the sheet is coiled at a coiling temperature shown in Table 2, and a hot rolled steel sheet having a thickness shown in Table 2 was obtained. The cooling was started within 2 seconds after completion of the finish rolling. For the first-stage cooling, the average cooling rate from the finish rolling delivery temperature to the cooling end temperature is shown. For the second-stage cooling, the average cooling rate from the cooling end temperature of the first-stage cooling to the coiling temperature is shown.

A test piece was taken from the obtained hot rolled steel sheet and subjected to structural observation, tensile test, and blanking test to evaluate the strength and blanking workability. The test methods were as follows.

(1) Structural observation

A test piece for structural observation was taken from the obtained hot rolled steel sheet and a sheet-thickness cross section (L-direction cross section) taken in a direction parallel to the rolling direction and a sheet-thickness cross section (C-direction cross section) taken in a direction perpendicular to the rolling direction were polished and corroded with a 3% nital solution to expose the microstructures. The microstructure of the L-direction cross section was observed with a scanning electron microscope (magnification: 3,000) and five areas of observation were photographed in the sheet thickness direction and image-processed to calculate the fractions of the respective phases.

In the region having a thickness equal to 1/4 of the sheet thickness from the surface in the thickness direction, the microstructures of the L-direction cross section and the C-direction cross section were observed with a scanning electron microscope (magnification: 3,000). A first photograph was taken at a position from which a portion having a depth of 50 $\mu$m from the outermost surface had been removed and subsequently photographs were taken at 50 $\mu$m intervals from that position. Then the average grain diameter of the bainite phase was determined. The average grain diameter was determined by drawing two orthogonally intersecting lines having a length of 80 mm inclined 45° in the sheet thickness direction on a photograph of the microstructure obtained, measuring the length of the intercept for each grain, and calculating the arithmetic average of the lengths of the intercepts. The obtained average value was assumed to be the average grain diameter of the bainite phase of that steel sheet.

The microstructure of the L-direction cross section was observed with a scanning electron microscope (magnification: 3,000) at the sheet thickness center position, two positions respectively 1/20-sheet-thickness-away from the sheet thickness center position in two opposite sheet thickness directions, and the middle positions thereof (each middle position being between the sheet thickness center position and the 1/20t position). Three areas of observations were photographed at each position. Based on the obtained photographs of the microstructure, the aspect ratio of the crystal grains was determined and the number of crystal grains (extended grains) extended in the rolling direction was determined. The aspect ratio is the ratio of the length of the each crystal grain in the L direction to that in the C direction.

(2) Tensile test

A JIS No. 5 test piece (GL: 50 mm) was taken from the obtained hot rolled steel sheet so that the tensile direction was perpendicular to the rolling direction and a tensile test was conducted in accordance with JIS Z 2241 to determine the tensile properties (yield strength (yield point) YP, tensile strength TS, and elongation El).

(3) Blanking test

An as rolled test piece (size: 50 × 50 mm) was taken from the obtained hot rolled steel sheet and a hole (10 mm in diameter) was formed at the center of the test piece by blanking. In some test pieces, scale was removed by pickling and test pieces with pickled skin were used.

In the blanking test, the blanking clearance was varied in the range of 5 to 25% at 2.5% pitches. The clearance here is the ratio (%) with respect to the sheet thickness. The blanked test pieces were divided into four equal segments along diagonal lines so that the L-direction blanked edge and the C-direction blanked edge of the blanked hole could be observed. The blanked hole edges of the four equally divided segments of the test piece were observed with a stereoscopic microscope of 10 times power through out the entire region in the thickness direction to study the brittle fracture surface, the secondary shear surface, and presence of cracks caused by segregation. Test pieces with such fracture appearance were rated poor for blanking workability.

Ra of the edges of test pieces free of fracture appearance was measured in the region having a thickness equal to 1/4 of the sheet thickness from the steel sheet surface in the thickness direction. Ra is an arithmetic average roughness defined in JIS B0601 (2001).

Measurement was conducted at a total of four positions including a position 50 $\mu$m in the sheet thickness direction from the outermost surface on the burred side, a position located at a depth of 1/4 of the sheet thickness from the outermost surface, and two equally spaced positions between these positions, and a 1-mm length roughness curve was measured in the arc direction (circumferential direction) at each position. Based on the four roughness curves obtained, the surface roughness Ra was calculated and the arithmetic average value of Ra was assumed to be the average Ra of that test piece. This measurement of surface roughness was conducted on all of the four equal segments (two segments having L direction blanked edges and two segments having C direction blanked edges, total of four) of the test piece, and the average of Ra obtained was assumed to be Ra of the blanked fracture appearance of that steel sheet.

A steel sheet was evaluated as having excellent blanking workability when Ra of the blanked fracture appearance is less than 18 $\mu$m at a blanking clearance of 10 to 20% and was rated good "○". A steel sheet having Ra of 18 $\mu$m or more was evaluated as having insufficient blanking workability and was rated poor "×". The results are shown in Table 3.

[Table 1]

| Steel No. | Chemical composition (mass%) | | | | | | | | | | | | Reference |
|---|---|---|---|---|---|---|---|---|---|---|---|---|---|
| | C | Si | Mn | P | S | Al | N | Ti | Nb, V | Cr, Ni, Mo, Cu | B | Ca, REM | |
| A | 0.051 | 0.46 | 1.31 | 0.027 | 0.0017 | 0.068 | 0.0048 | 0.052 | Nb: 0.060 V:0.014 | - | - | REM: 0.0017 | Example |
| B | 0.062 | 1.15 | 1.97 | 0.012 | 0.0027 | 0.055 | 0.0039 | 0.081 | - | Cu: 0.008 Ni: 0.015 | - | - | Example |
| C | 0.071 | 0.64 | 1.39 | 0.009 | 0.0005 | 0.029 | 0.0032 | 0.106 | - | - | - | - | Example |
| D | 0.095 | 1.42 | 1.15 | 0.024 | 0.0026 | 0.033 | 0.0022 | 0.125 | V: 0.005 | - | - | Ca: 0.0029 | Example |
| E | 0.115 | 0.78 | 1.25 | 0.016 | 0.0009 | 0.059 | 0.0036 | 0.061 | Nb: 0.006 | Cr: 0.28 | - | - | Example |
| F | 0.1041 | 0.13 | 1.09 | 0.005 | 0.0013 | 0.012 | 0.0011 | 0.148 | - | Mo: 0.011 | - | - | Example |
| G | 0.052 | 0.69 | 1.24 | 0.008 | 0.0007 | 0.032 | 0.0032 | 0.100 | V: 0.10 | Mo: 0.08 | 0.0006 | - | Comparative Example |
| H | 0.062 | 0.93 | 1.46 | 0.015 | 0.0020 | 0.036 | 0.0032 | 0.165 | Nb: 0.058 | Ni: 0.01 Cr: 0.02 | - | - | Comparative Example |
| I | 0.047 | 0.77 | 1.17 | 0.014 | 0.0014 | 0.044 | 0.0047 | 0.119 | Nb: 0.009 | - | - | - | Comparative Example |
| J | 0.161 | 0.33 | 1.66 | 0.028 | 0.0019 | 0.045 | 0.0038 | 0.141 | - | Cr: 0.14 | - | - | Comparative Example |
| K | 0.096 | 0.95 | 2.35 | 0.016 | 0.0024 | 0.051 | 0.0044 | 0.071 | Nb: 0.03 | - | - | - | Comparative Example |

[Table 2]

| Hot rolled steel sheet No. | Steel No. | Sheet thickness mm | Ar₃ transformation point (°C) | Hot rolling conditions | | Cooling conditions | | | Coiling condition | Reference |
|---|---|---|---|---|---|---|---|---|---|---|
| | | | | Heating temperature (°C) | Finish rolling delivery temperature (°C) | First-stage cooling | | Second-stage cooling | Coiling temperature (°C) | |
| | | | | | | Average cooling rate* (°C/s) | Cooling end temperature (°C) | Average cooling rate** (°C/s) | | |
| 1 | A | 3.0 | 824 | 1180 | 875 | 150 | 560 | 125 | 505 | Comparative Example |
| 2 | A | 3.0 | 834 | 1220 | 900 | 120 | 575 | 145 | 480 | Example |
| 3 | A | 3.0 | 803 | 1290 | 925 | 210 | 550 | 245 | 295 | Comparative Example |
| 4 | B | 6.0 | 861 | 1260 | 895 | 40 | 555 | 135 | 450 | Example |
| 5 | C | 6.0 | 859 | 1275 | 900 | 95 | 545 | 115 | 430 | Example |
| 6 | C | 6.0 | 871 | 1290 | 1022 | 60 | 565 | 100 | 495 | Comparative Example |
| 7 | C | 6.0 | 882 | 1300 | 915 | 30 | 560 | 90 | 425 | Comparative Example |
| 8 | D | 3.0 | 882 | 1250 | 920 | 140 | 525 | 160 | 540 | Example |
| 9 | E | 6.0 | 849 | 1280 | 890 | 65 | 540 | 95 | 405 | Example |
| 10 | F | 6.0 | 835 | 1315 | 865 | 90 | 555 | 105 | 385 | Example |
| 11 | G | 6.0 | 906 | 1230 | 945 | 30 | 585 | 90 | 505 | Comparative Example |
| 12 | H | 3.0 | 903 | 1280 | 956 | 90 | 575 | 70 | 495 | Comparative Example |
| 13 | I | 3.0 | 836 | 1290 | 895 | 170 | 550 | 60 | 465 | Comparative Example |
| 14 | J | 3.0 | 849 | 1300 | 903 | 55 | 575 | 90 | 485 | Comparative Example |

| Hot rolled steel sheet No. | Steel No. | Sheet thickness mm | Ar$_3$ transformation point (°C) | Hot rolling conditions | | Cooling conditions | | | Coiling condition | Reference |
| | | | | Heating temperature (°C) | Finish rolling delivery temperature (°C) | First-stage cooling | | Second-stage cooling | Coiling temperature (°C) | |
| | | | | | | Average cooling rate* (°C/s) | Cooling end temperature (°C) | Average cooling rate** (°C/s) | | |
|---|---|---|---|---|---|---|---|---|---|---|
| 15 | K | 3.0 | 794 | 1225 | 851 | 185 | 525 | 230 | 340 | Comparative Example |

\*) Average cooling rate from finish rolling delivery temperature to cooling end temperature
\*\*) Average cooling rate from cooling end temperature of first-stage cooling to coiling temperature

[Table 3]

| Hot rolled steel sheet No. | Steel No. | Microstructure throughout entire sheet thickness | | Microstructure 1/4 T from surface | | Microstructure in sheet thickness central portion ** | Tensile properties | | | Blanking workability | | Reference |
|---|---|---|---|---|---|---|---|---|---|---|---|---|
| | | Type* | B fraction (area%) | Bainite average grain diameter | | Number of expanded grains*** | YS (MPa) | TS (MPa) | El (%) | Condition of test piece surface | Evaluation of blanked edge | |
| | | | | L cross-section (mm) | C cross-section (mm) | | | | | | | |
| 1 | A | B + P | 92.0 | 8.5 | 3.8 | 10 | 645 | 770 | 21.5 | as forged | Poor | Comparative Example |
| 2 | A | B + M | 95.5 | 4.9 | 3.8 | 5 | 660 | 785 | 23.5 | as forged | Good | Example |
| 3 | A | B + F + P + M | 35.0 | 4.8 | 3.9 | 8 | 695 | 825 | 19.0 | -**** | Poor | Comparative Example |
| 4 | B | B + M | 96.0 | 4.7 | 3.7 | 7 | 685 | 805 | 27.0 | as forged | Good | Example |
| 5 | C | B+M | 97.0 | 3.9 | 3.3 | 4 | 705 | 820 | 28.5 | -**** | Good | Example |
| 6 | C | B + F + P | 95.5 | 8.8 | 7.9 | 5 | 668 | 750 | 22.0 | as forged | Poor | Comparative Example |
| 7 | C | B + F + P + M | 55.0 | 10.5 | 8.9 | 9 | 565 | 741 | 24.0 | -**** | Poor | Comparative Example |
| 8 | D | B + M | 97.0 | 3.3 | 2.5 | 6 | 815 | 980 | 15.5 | -**** | Good | Example |
| 9 | E | B + M | 99.0 | 2.9 | 1.4 | 7 | 826 | 995 | 18.0 | as forged | Good | Example |
| 10 | F | B + P | 98.0 | 3.0 | 2.8 | 5 | 774 | 875 | 18.5 | -**** | Good | Example |
| 11 | G | B+F+P+M | 68.0 | 9.5 | 7.7 | 7 | 615 | 765 | 23.5 | -**** | Poor | Comparative Example |
| 12 | H | B+F+P+M | 80.5 | 7.4 | 5.5 | 9 | 640 | 775 | 18.5 | as forged | Poor | Comparative Example |
| 13 | I | B + F + P | 89.0 | 11.5 | 10.2 | 7 | 605 | 735 | 22.0 | -**** | Poor | Comparative Example |
| 14 | J | B + F + P + M | 22.5 | 12.2 | 11.6 | 8 | 804 | 998 | 12.2 | as forged | Poor | Comparative Example |

| Hot rolled steel sheet No. | Steel No. | Microstructure throughout entire sheet thickness | | Microstructure 1/4 T from surface | | Microstructure in sheet thickness central portion ** | Tensile properties | | | Blanking workability | | Reference |
|---|---|---|---|---|---|---|---|---|---|---|---|---|
| | | Type* | B fraction (area%) | Bainite average grain diameter | | Number of expanded grains*** | YS (MPa) | TS (MPa) | El (%) | Condition of test piece surface | Evaluation of blanked edge | |
| | | | | L cross-section (mm) | C cross-section (mm) | | | | | | | |
| 15 | K | B + M + F | 43.5 | 4.8 | 3.7 | 11 | 886 | 1085 | 10.3 | -**** | Poor | Comparative Example |

*) B: bainite, M: martensite, F: ferrite, P: pearlite
**) Region a thickness equal to 1/10 of the sheet thickness with its center located at the center of the sheet in the thickness direction.
***) Grains having aspect ratio of 5 or more
****) "-": no scale (pickled skin)

EP 2 617 851 B1

Examples of the present invention all exhibited a high strength of 780 MPa or more in terms of tensile strength TS and were evaluated as having good blanking workability "○". Thus, a high strength hot rolled steel sheet having excellent blanking workability was obtained in all Examples. In contrast, Comparative examples outside the ranges of the present invention had insufficient strength or were rated poor for blanking workability "X", showing degraded blanking workability.

## Claims

1. A method for manufacturing a high strength hot rolled steel sheet having excellent blanking workability, the method comprising heating a steel having a composition that includes, in terms of mass%,

| | |
|---|---|
| C: 0.050 to 0.15%, | Si: 0.1 to 1.5%, |
| Mn: 1.0 to 2.0%, | P: 0.03% or less, |
| S: 0.0030% or less, | Al: 0.01 to 0.08%, |
| Ti: 0.05 to 0.15%, | N: 0.005% or less, |

and further optionally includes, in terms of mass%,
one or both of Nb: 0.005 to 0.1% and V: 0.005 to 0.2%,
at least one selected from Cu: 0.005 to 0.3%, Ni: 0.005 to 0.3% Cr: 0.005 to 0.3%, and Mo: 0.005 to 0.3%, and
one or both of Ca: 0.0005 to 0.03% and REM: 0.0005 to 0.03%,
and the balance being Fe and unavoidable impurities, to 1200 to 1350°C and subjecting the heated steel to hot rolling that includes rough rolling and finish rolling, wherein a finish rolling delivery temperature of the finish rolling is set to a temperature within a range of "$Ar_3$ transformation point +30°C or more" and "$Ar_3$ transformation point +150°C or less", cooling is immediately started after completion of the finish rolling, the cooling is conducted in two stages including first-stage cooling in which the finish rolled sheet is cooled at an average cooling rate of 35°C/sec. or more from the finish rolling delivery temperature to a first stage cooling end temperature of 520 to 580°C and a second-stage cooling in which the finish rolled sheet is cooled at an average cooling rate of 80°C/sec. or more from the first stage cooling end temperature to a coiling temperature, and coiling is performed at a coiling temperature of 300 to 500°C.

2. The method for manufacturing a high strength hot rolled steel sheet according to Claim 1, wherein the steel contains one or both of Nb: 0.005 to 0.1% and V: 0.005 to 0.2% in terms of mass% of the steel.

3. The method for manufacturing a high strength hot rolled steel sheet according to Claim 1 or 2, wherein the steel contains at least one selected from Cu: 0.005 to 0.3%, Ni: 0.005 to 0.3%, Cr: 0.005 to 0.3%, and Mo: 0.005 to 0.3% in terms of mass%.

4. The method for manufacturing a high strength hot rolled steel sheet according to any one of Claims 1 to 3, wherein the steel contains one or both of Ca: 0.0005 to 0.03% and REM: 0.0005 to 0.03% in terms of mass%.

## Patentansprüche

1. Verfahren zur Herstellung eines hochfesten warmgewalzten Stahlblechs mit hervorragender Schneidarbeitsfähigkeit, wobei das Verfahren das Erwärmen eines Stahls mit einer Zusammensetzung, die bezogen auf Massen-% aufweist C: 0,050 bis 0,15%, Si: 0,1 bis 1,5%, Mn: 1,0 bis 2,0%, P: 0,03% oder weniger, S: 0,0030% oder weniger, Al: 0,01 bis 0,08%, Ti: 0,05 auf 0,15%, N: 0,005% oder weniger, und ferner optional bezogen auf Masse-% aufweist eines oder beide aus Nb: 0,005 bis 0,1% und V: 0,005 bis 0,2%, mindestens eines ausgewählt aus Cu: 0,005 bis 0,3%, Ni: 0,005 bis 0,3%, Cr 0,005 bis 0,3% und Mo: 0,005 bis 0,3%, und eines oder beide aus Ca: 0,0005 bis 0,03% und REM: 0,0005 bis 0,03% und als Rest Fe und unvermeidbare Verunreinigungen, auf 1200 bis 1350°C und Unterziehen des erwärmten Stahls einem Warmwalzen, das Grobwalzen und Fertigwalzen aufweist, wobei eine Fertigwalzenausgabetemperatur des Fertigwalzens auf eine Temperatur innerhalb eines Bereichs von "$Ar_3$ Umwandlungspunkt + 30°C oder mehr" und "$Ar_3$ Umwandlungspunkt + 150°C oder weniger" eingestellt wird, nach Abschluss des Fertigwalzen sofort mit dem Kühlen begonnen wird, das Kühlen in zwei Stufen durchgeführt wird, mit Kühlen einer ersten Stufe, in der das fertiggewalzte Blech mit einer durchschnittlichen Kühlrate von 35°C/s oder mehr von der Fertigwalzausgabetemperatur zu einer Endtemperatur des Kühlens der ersten Stufe von 520 bis 580°C gekühlt wird und Kühlen einer zweiten Stufe, in der das fertiggewalzte Blech mit einer durchschnittlichen Kühlrate von 80°C/s oder mehr von der Endtemperatur des Kühlens der ersten Stufe bis zu einer Wickeltemperatur gekühlt wird, und Wickeln bei einer Wickeltemperatur von 300 bis 500°C durchgeführt wird.

2. Verfahren zur Herstellung eines hochfesten warmgewalzten Stahlblechs nach Anspruch 1, wobei der Stahl eines oder beide von Nb: 0,005 bis 0,1% und oder V: 0,005 bis 0,2%, bezogen auf Masse-% des Stahls enthält.

3. Verfahren zur Herstellung eines hochfesten warmgewalzten Stahlblechs nach Anspruch 1 oder 2, wobei der Stahl mindestens eines ausgewählt aus der Gruppe bestehend aus Cu: 0,005 bis 0,3%, Ni: 0,005 bis 0,3%, Cr 0,005 bis 0,3% und Mo: 0,005 bis 0,3%, bezogen auf Masse-% enthält.

4. Verfahren zur Herstellung eines hochfesten warmgewalzten Stahlblechs nach einem der Ansprüche 1 bis 3, wobei der Stahl eines oder beide von Ca: 0,0005 bis 0,03% und REM: 0,0005 bis 0,03% bezogen auf Masse-% enthält.

**Revendications**

1. Procédé de fabrication d'une tôle d'acier laminée à chaud à haute résistance présentant une excellente aptitude au découpage à la presse, le procédé comprenant le chauffage d'un acier ayant une composition qui comprend, en termes de % en masse,

| | |
|---|---|
| C: 0,050 à 0,15 % | Si : 0,1 à 1,5 %, |
| Mn : 1,0 à 2,0 % | P : 0,03 % ou moins, |
| S : 0,0030 % ou moins, | Al : 0,01 à 0,08 %, |
| Ti: 0,05 à 0,15 %, | N : 0,005 % ou moins, |

et comprend en outre facultativement, en termes de % en masse,
un ou les deux parmi Nb : 0,005 à 0,1 % et V : 0,005 à 0,2 %,
au moins l'un sélectionné parmi Cu : 0,005 à 0,3 %, Ni : 0,005 à 0,3 %, Cr : 0,005 à 0,3 %, et Mo : 0,005 à 0,3 %, et
un ou les deux parmi Ca : 0,0005 à 0,03 % et REM : 0,0005 à 0,03 %,
et le reste étant Fe et les impuretés inévitables, entre 1200 et 1350 °C, et la soumission de l'acier chauffé à un laminage à chaud qui comprend un laminage grossier et un laminage de finition, dans lequel une température de délivrance de laminage de finition du laminage de finition est fixée à une température située dans une plage allant du « point de transformation Ar$_3$ +30°C ou plus » au « point de transformation Ar$_3$ +150 °C ou moins », le refroidissement est immédiatement commencé après la fin du laminage de finition, le refroidissement est réalisé en deux stades comprenant un refroidissement de premier stade dans lequel la tôle ayant subi un laminage de finition est refroidie à une vitesse moyenne de refroidissement de 35 °C/seconde ou plus à partir de la température de délivrance de laminage de finition jusqu'à une température finale de refroidissement de premier stade de 520 à 580 °C et un refroidissement de second stade dans lequel la tôle ayant subi un laminage de finition est refroidie à une vitesse moyenne de refroidissement de 80 °C/seconde ou plus à partir de la température finale de refroidissement de premier stade jusqu'à une température de bobinage, et un bobinage est réalisé à une température de bobinage de 300 à 500 °C.

2. Procédé de fabrication d'une tôle d'acier laminée à chaud à haute résistance selon la revendication 1, dans lequel l'acier contient un ou les deux parmi Nb : 0,005 à 0,1 % et V : 0,005 à 0,2 % en termes de % en masse de l'acier.

3. Procédé de fabrication d'une tôle d'acier laminée à chaud à haute résistance selon la revendication 1 ou 2, dans lequel l'acier contient au moins l'un sélectionné parmi Cu : 0,005 à 0,3 %, Ni : 0,005 à 0,3 %, Cr : 0,005 à 0,3 %, et Mo : 0,005 à 0,3 % en termes de % en masse.

4. Procédé de fabrication d'une tôle d'acier laminée à chaud à haute résistance selon l'une quelconque des revendications 1 3, dans lequel l'acier contient un ou les deux parmi Ca : 0,0005 à 0,03 % et REM : 0,0005 à 0,03 % en termes de % en masse.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3889766 B

- JP 2004315857 A